# EUROPEAN PATENT APPLICATION

(11) **EP 3 550 249 A1**
(43) Date of publication of application: **09.10.2019**
(21) Application number: 19158563.7
(22) Date of filing: 21.02.2019
(51) Int. Cl.: F28D 15/02

(54) **HEAT PIPE ENVELOPE OF HEAT EXCHANGER**

(30) Priority: 09.03.2018 TW 107108037
(71) Applicant: Li-Hong Science & Technology Co., Ltd., Kaohsiung City 840 (TW)
(72) Inventor: Chang, Kun-Jung, 840 Kaohsiung City (TW); Chang, Han-Wen, 840 Kaohsiung City (TW); Juan, Wei-Cheng, 840 Kaohsiung City (TW)
(74) Representative: 2K Patentanwälte Blasberg Kewitz & Reichel

(57) **Abstract**

A heat pipe envelope (100a, 100b, 100c) of a heat exchanger is used to coordinate with a partition (800) and a heat pipe (900) passing through an installation opening (810) on the partition (800). The heat pipe envelope (100a, 100b, 100c) includes a first component (10) and a second component (20). The first component (10) includes a first flange (11), a first connection portion (12) and a first channel (13). The heat pipe (900) is penetrated through the first channel (13). The second component (20) comprises a second flange (21), a second connection portion (22) and a second channel (23). The first flange (11) comprises appropriate flexibility which is slightly tilted towards the first connection portion (12), and the first component (10) is drawn by force generated by tight connection of the first connection portion (12) and the second connection portion (22) to cause the first flange (11) to closely leaning against one side of the partition (800) to generate slight deformation.

## Description

### FIELD OF THE INVENTION

The present invention relates to a heat pipe envelope of a heat exchanger, and particularly to a heat pipe envelope used for connection and sealing between a heat pipe and a partition in a heat exchanger.

### BACKGROUND OF THE INVENTION

In the technical field of heat exchanger devices, an assembly plate heat exchanger and a heat pipe heat exchanger feature advantages of high heat transfer efficiencies, easy maintenance and high economical values, are extensively adopted. However, a heat exchanging plate and a fixing structure of the assembly plate heat exchanger are in contact by a long rectangular area, and large-area sealing needs to be performed, which easily results drawbacks of leakage and damage in the heat exchanging plate and a sealing washer. Therefore, welding is often used for connection. On the other hand, in the heat pipe heat exchanger, a contact area between each heat pipe and a fixing structure is relatively small and thus a more ideal sealing effect is achieved. Correspondingly, the heat pipe heat exchanger has drawbacks of less convenient maintenance, cleaning and installation with respect to the plate heat exchanger.

The Taiwan Patent No. 1494532 discloses a thermal conductivity structure and a heat exchanging device as well as heat exchanging system using the thermal conductivity structure. The disclosure includes a thermal conductivity metal layer, a thermal conductivity support layer and a thermal conductivity protective layer. The thermal conductivity support layer is covered on a surface of the thermal conductivity metal layer. The thermal conductivity protective layer is covered on a surface of the thermal conductivity support layer. A support portion is sealed and connected with a plurality of thermal conductivity structures by welding. In such connection manner to install the heat exchanger, an operation space needs to be reserved for each thermal conductivity structure and the support portion. Further, to separate the support portion from the thermal conductivity structures, the original welded part needs to be destructed before implementing the separation, however it is unsecured to cause damage to the thermal conductivity structures during the destruction. Therefore, there is a need for a solution in the industry for overcoming the drawbacks of the prior art.

### SUMMARY OF THE INVENTION

It is an object of the present invention to solve difficulties on installation, disassembly, cleaning and maintenance of the prior art because of assembly in a welding manner often used between a thermal conductivity element and a corresponding fixing structure.

To achieve the above object, the present invention provides a heat pipe envelope of a heat exchanger, wherein the heat pipe envelope is used to coordinate with a partition and a heat pipe passing through an installation opening on the partition plate. The heat pipe envelope of the heat exchanger includes a first component and a second component. The first component includes a first flange leaning against one side of the partition, a first connection portion connected to the first flange and passing through the installation opening, and a first channel penetrating through the first flange and the first connection portion. The heat pipe is penetrated through the first channel. The second component includes a second flange leaning against another side of the partition opposite to the first flange, a second connection portion connected to the second flange and sleeved on the first connection portion to form tight connection, and a second channel penetrating through the second flange and the second connection portion. The first flange comprises an appropriate flexibility, which is slighted tilted towards the first connection portion, and the first component is drawn by a force generated by tight connection of the first connection portion and the second connection portion, and the first flange is in a sealed state by closely leaning against one side of the partition to generate slight deformation.

Further, the first component includes an extension portion connected to the first connection portion and extending away from the first flange, and an extension channel penetrating through the extension portion is in communication with the first channel, wherein a diameter of the extension channel is smaller than the first channel, and the heat pipe is penetrated through the first channel and the extension channel.

Further, the heat pipe envelope of a heat exchanger includes a third component. The third component includes a heat pipe sleeve sleeved on the heat pipe, and a third flange connected to the heat pipe sleeve. The heat pipe is penetrated through the extension channel, and the third flange blocks at one end of the extension channel facing the first channel.

Further, the third assembly is a Teflon material.

Further, the first component includes a first screw thread located on an outer periphery of the first connection portion, and the second component includes a second screw thread located on an inner periphery of the second connection portion and paired with the first screw thread.

Further, a shape of the first flange corresponding to the partition is a polygon.

Further, the first component includes a guide angle sleeve connected to the first connection portion and extending away from the first flange.

As such, the present invention provides the following effects compared to the prior art.

In the heat pipe envelope of the heat exchanger of the present invention, the first component and the second component tightly connected with each other by screw fastening, so as to achieve the object that gaps between the partition and the first component, the second component as well as the heat pipe can be sealed, thus eliminating issues of heat overflow and leakage or improper sealing. Further, the heat pipe envelope of heat exchanger of the present invention can replace a conventional welding process at seams of components in the prior art. Hence, an operation space doesn't need to be reserved any longer, and density of heat pipes arranged on a partition can be increased, which equivalently increases the heat exchange efficiency within unit area. Further, in regard to cleaning and maintenance of the present invention, the heat pipe can be safely removed without any damage from the partition by merely loosening the first component and the second component, thereby overcoming the drawbacks of a conventional welding process.

### BRIEF DESCRIPTION OF THE DRAWINGS

Fig. 1 is an exploded perspective diagram according to a first embodiment of the present invention;
Fig. 2 is a perspective assembly diagram according to the first embodiment of the present invention;
Fig. 3 is an exploded perspective diagram of a partition and the first embodiment of the present invention;
Fig. 4 is a perspective assembly diagram of a partition and the first embodiment of the present invention;
Fig. 5 is a planar assembly diagram of one other side of a partition and the first embodiment of the present invention;
Fig. 6 is a side diagram of a state of use according to the first embodiment of the present invention;
Fig. 7A is a section diagram of a state of use according to the first embodiment of the present invention;
Fig. 7B is a partial enlarged diagram of Fig. 7A;
Fig. 7C is a schematic diagram of Fig. 7B packing against a first flange;
Fig. 8 is an exploded perspective diagram according to a second embodiment of the present invention;
Fig. 9 is an exploded diagram of a state of use according to the second embodiment of the present invention;
Fig. 10 is an assembly diagram of a state of use according to the second embodiment of the present invention;
Fig. 11 is a section diagram of a state of use according to the second embodiment of the present invention;
Fig. 12 is an exploded diagram of a state of use according to a third embodiment of the present invention;
Fig. 13 is an assembly diagram of a state of use according to the third embodiment of the present invention;
Fig. 14 is a section diagram of a state of use according to the third embodiment of the present invention.

### DETAILED DESCRIPTION OF THE PREFERRED EMBODIMENTS

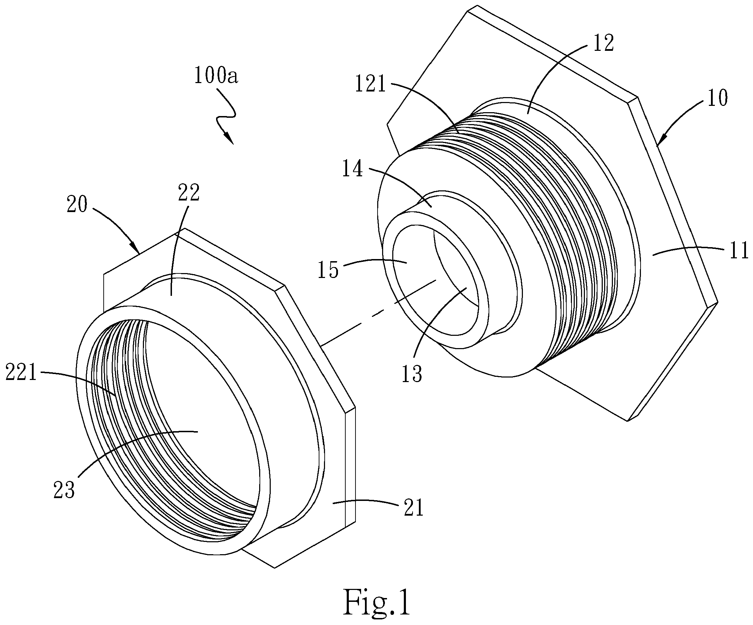

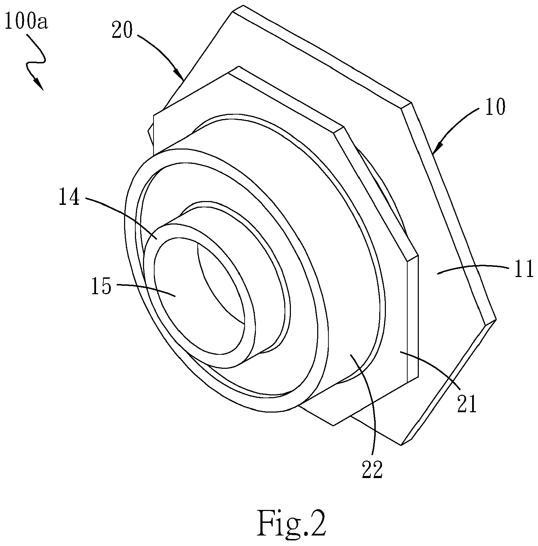

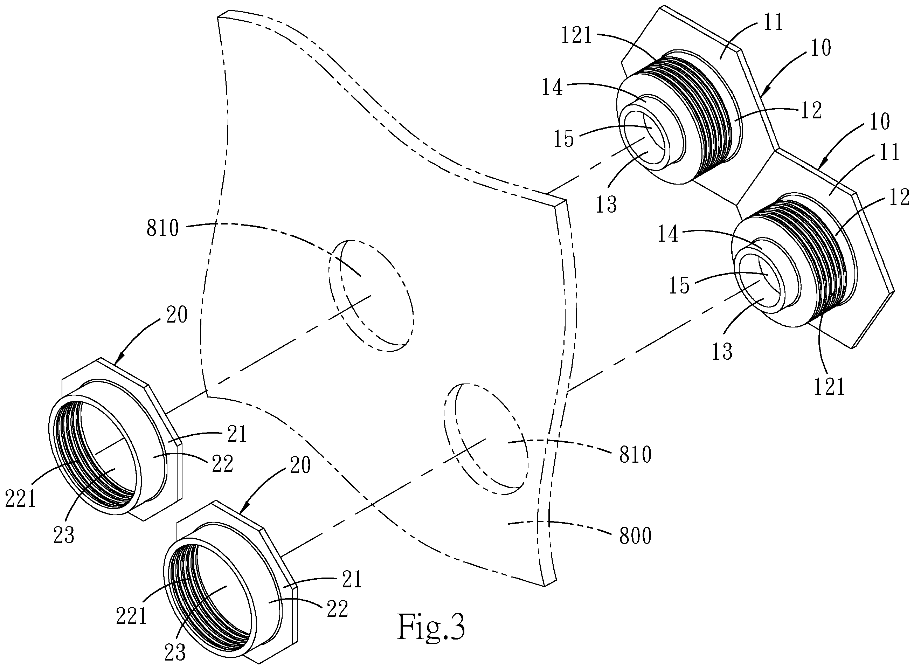

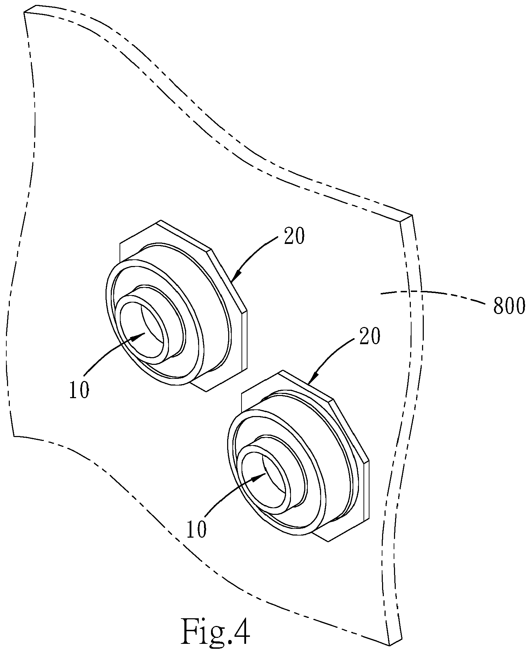

Regarding the object of the present invention, refer to Figs. 1, 2, 3, 4, 5, and 6. The present invention provides a heat pipe envelope 100a of a heat exchanger, wherein the heat pipe envelope 100a is used to coordinate with a partition 800 and a heat pipe 900 passing through an installation opening 810 on the partition 800. In general, the heat exchanger is provided with the plurality of installation openings 810 on the partition 800, and each of the plurality of installation openings 810 is installed with the corresponding heat pipe 900. Since the number of heat pipes 900 in the heat exchanger needs to be designed according to requirements, the number of heat pipes 900 is not specifically defined in the present invention. The heat pipe 900 comprises a capillary structure, a thermal fluid as a two-phase fluid changing between liquid and vapor thereinside. However, related technical of the heat pipe 900 are generally known to a person of ordinary skill in the art, and thereby the description of the internal structure of the heat pipe 900 is omitted herein.

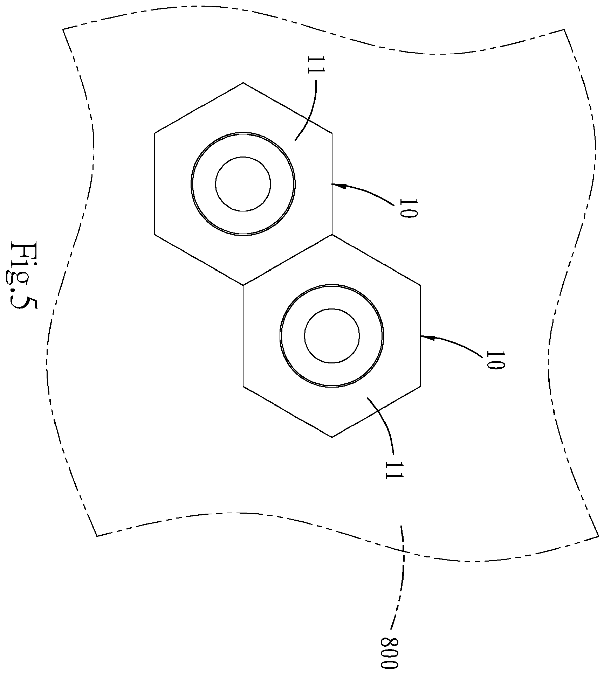

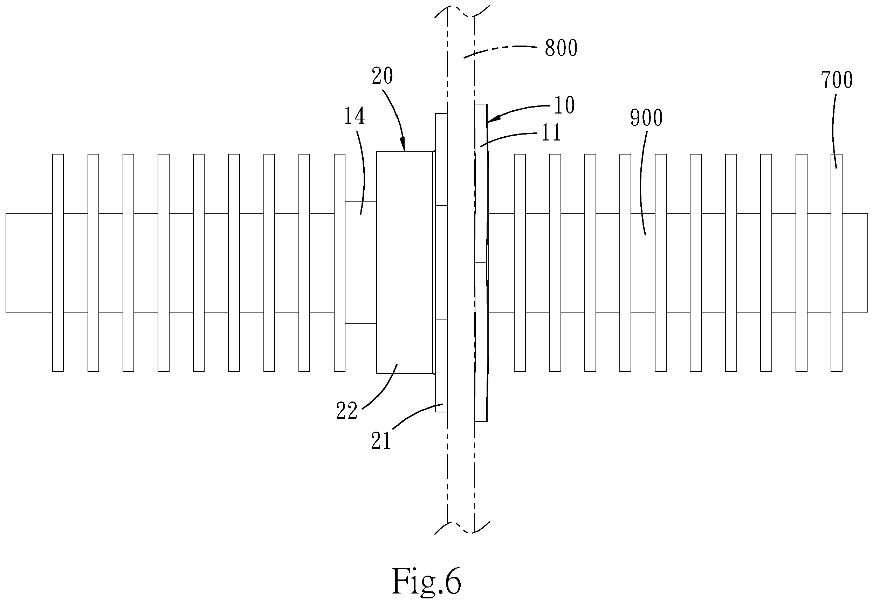

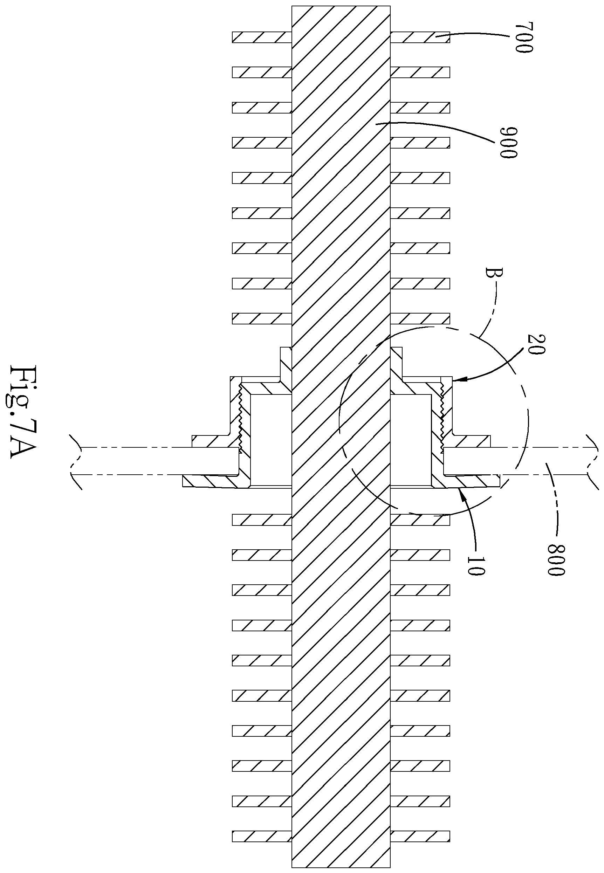

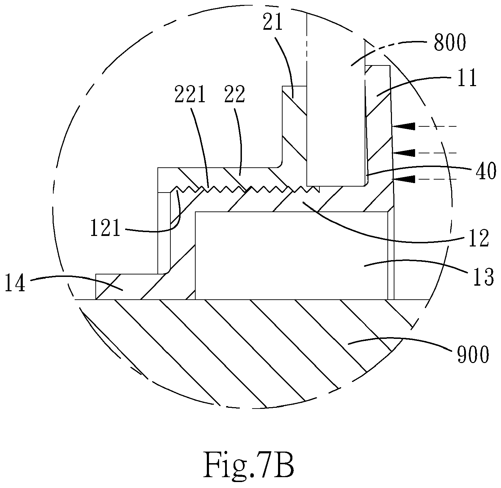

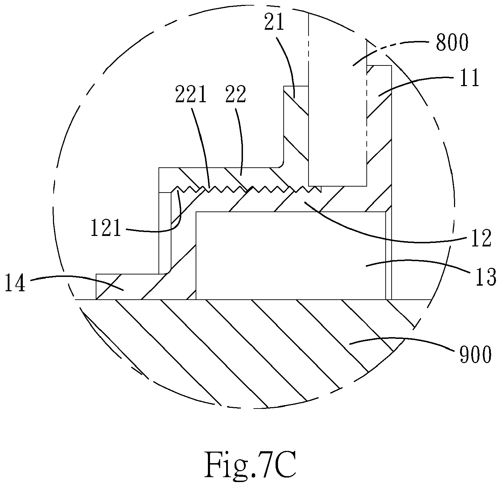

More specifically, referring to Figs. 6, 7A, 7B, and 7C, one side or both sides of the heat pipe 900 can be connected to a plurality of cooling fins 700 to increase the heat exchanging efficiency thereof. The heat pipe envelope 100a of the heat exchanger includes a first component 10 and a second component 20. The first component 10 includes a first flange 11 leaning against one side of the partition 800, a first connection portion 12 connected to the first flange 11 and passing through the installation opening 810, and a first channel 13 penetrating through the first flange 11 and the first connection portion 12. The heat pipe 900 is penetrated through the first channel 13. The second component 20 includes a second flange 21 leaning against another side of the partition 800 opposite to the first flange 11, a second connection portion 22 connected to the second flange 21, and sleeved on the first connection portion 12 to form tight connection, and a second channel 23 penetrating through the second flange 21 and the second connection portion 22. In this embodiment, the first component 10 includes a first screw thread 121 located on an outer periphery of the first connection portion 12, and the second component 20 includes a second screw thread 221 located on an inner periphery of the second connection portion 22 and paired with the first screw thread 121. Thus, the first connection portion 12 and the second connection portion 22 are fastened on two opposite sides of the partition 800 by screwing, and the partition 800 is clamped by using the first flange 11 and the second flange 21 to seal the gap between the heat pipe 900 and the installation openings 810. Further, the first component 10 includes an extension portion 14 connected to the first connection portion 12 and extending away from the first flange 11, and an extension channel 15 penetrating through the extension portion 14 is in communication with the first channel 13, wherein a diameter of the extension channel 15 is smaller than the first channel 13, and the heat pipe 900 is penetrated through the first channel 13 and the extension channel 15. Preferably, the extension channel 15 and the heat pipe 900 are configured in tight and intervened manner, so as to avoid heat energy overflowing from one side of the partition 800 near the second component 20 to one side near the first component 10. Referring to Fig. 5, a shape of the first flange 11 corresponding to the partition 800 is a polygon, which is exemplified by a hexagon in this embodiment. When the partition 800 is installed with the plurality of heat pipe envelopes 100a of the heat exchanger, two adjacent outer edges of the polygons of first flanges 11 are mutually fastened, thus preventing issues of rotation and loosening and facilitating installation.

Referring to Fig. 7B, the first flange 11 comprises appropriate flexibility, which is slightly tilted towards the first connection portion 12 to form an umbrella-like shape; a margin 40 is reserved between the first flange 11 and the partition 800. Referring to Fig. 7C, a force is generated when the first connection portion 12 and the second connection portion 22 are in tight connection, that is, a pulling force pulling along an axial direction of the heat pipe 900 towards the second component 20 is generated. The pulling force causes the first flange 11 to lean tightly against the partition 800. Further, the first flange 11 is slightly deformed after receiving a force due to the effect of the flexibility thereof, and then the first flange 11 leans closely against the partition 800 such that the margin 40 is completely filled up to present a sealed state. According to the above structure, the heat pipe envelope 100a of heat exchanger of the present invention is tightly and securely configuring the first component 10 and the second component 20 on the two sides of the partition 800, so as to achieve the object of the heat exchange that two ends of the heat pipe 900 can serve as good heat conductors, and which is applicable to such as waste heat recovery devices and power generation devices.

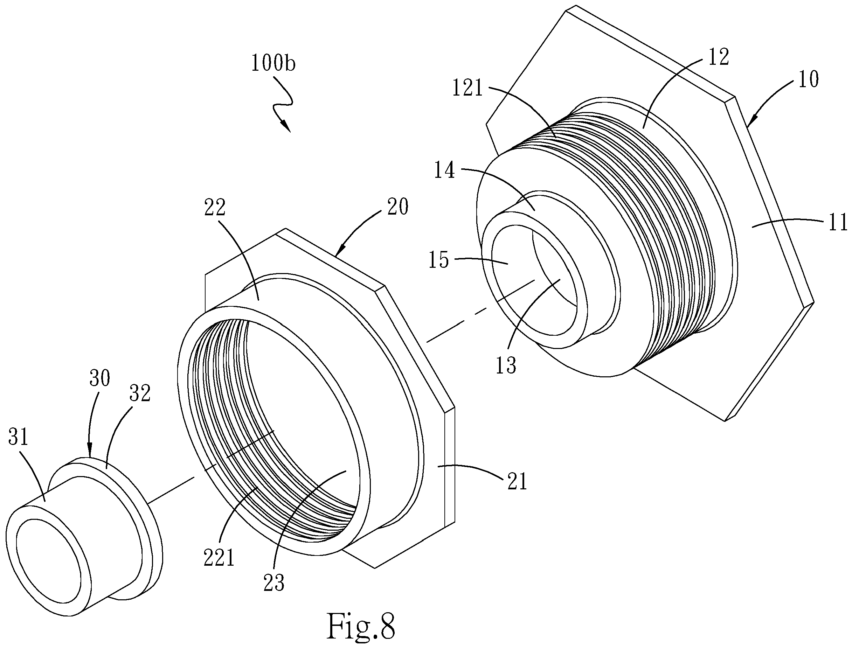

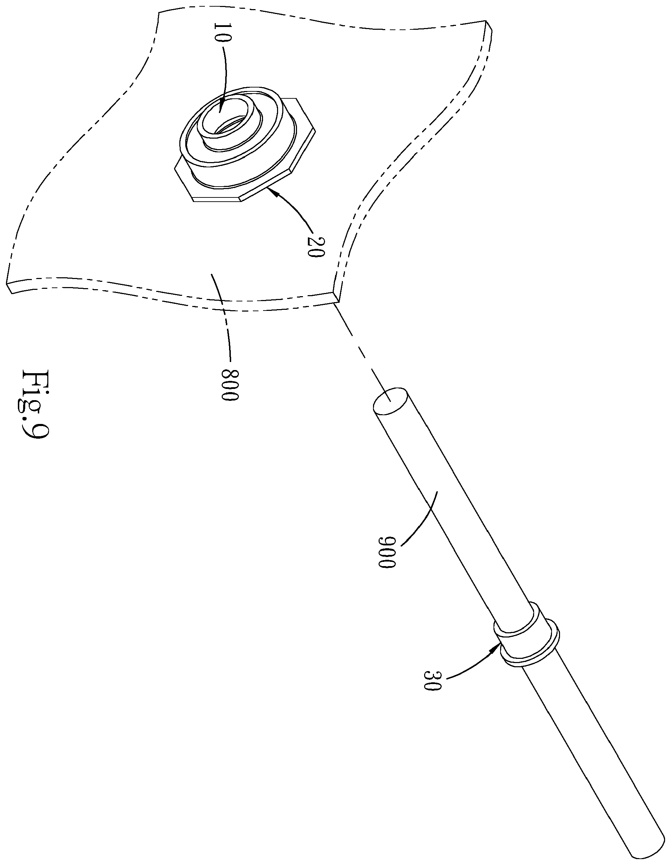

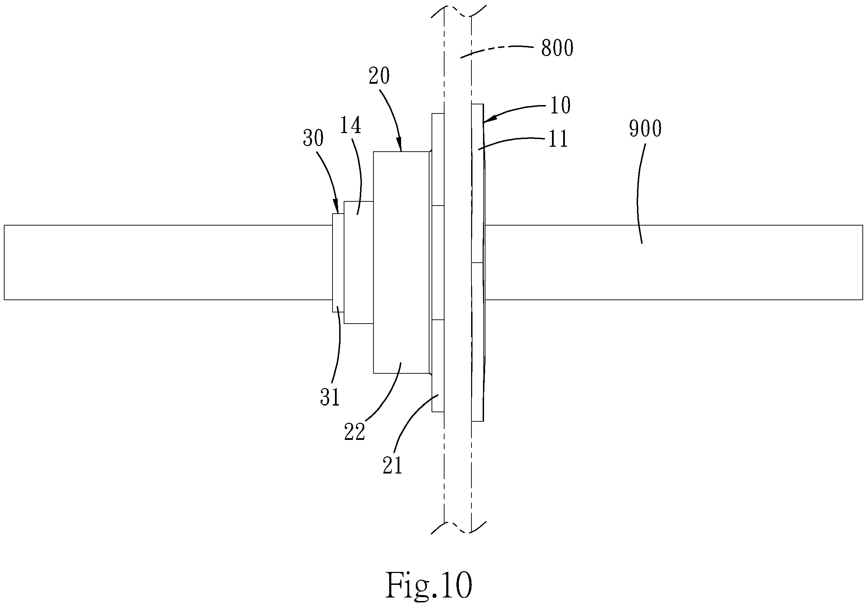

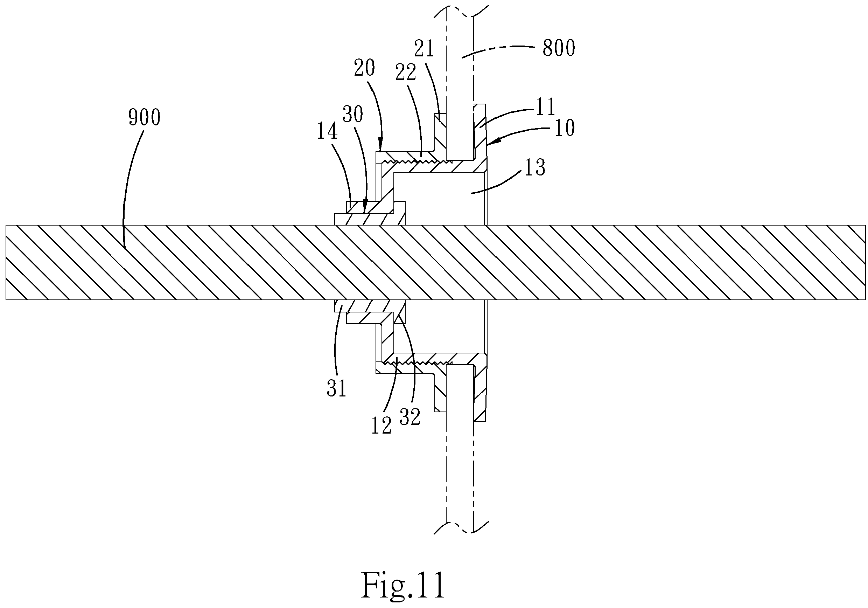

Referring to Figs. 8, 9, and 10, to further enhance the tightness between the partition 800 and the heat pipe 900, in a second embodiment of the present invention, a heat pipe envelope 100b of a heat exchanger further includes a third component 30. The third component 30 comprises a heat pipe sleeve 31 sleeved on the heat pipe 900, and a third flange 32 connected to the heat pipe sleeve 31. The heat pipe 900 is penetrated through the extension channel 15, and the third flange 32 blocks at one end of the first channel 13 facing the extension channel 15. In this embodiment, the third component 30 is a Teflon material. As shown in Fig. 9, a user can first assemble the first component 10 and the second component 20 on the two sides of the partition 800, and then insert the heat pipe 900 in the first channel 13 after sleeving the third component 300 on the tube body of the heat pipe 900. As shown in Fig. 11, because the third flange 32 blocks at the extension portion 14, a positioning object is achieved, and at the same time a contact position of the third flange 32 and the extension portion 14 is sealed, further reinforcing the tightness effect.

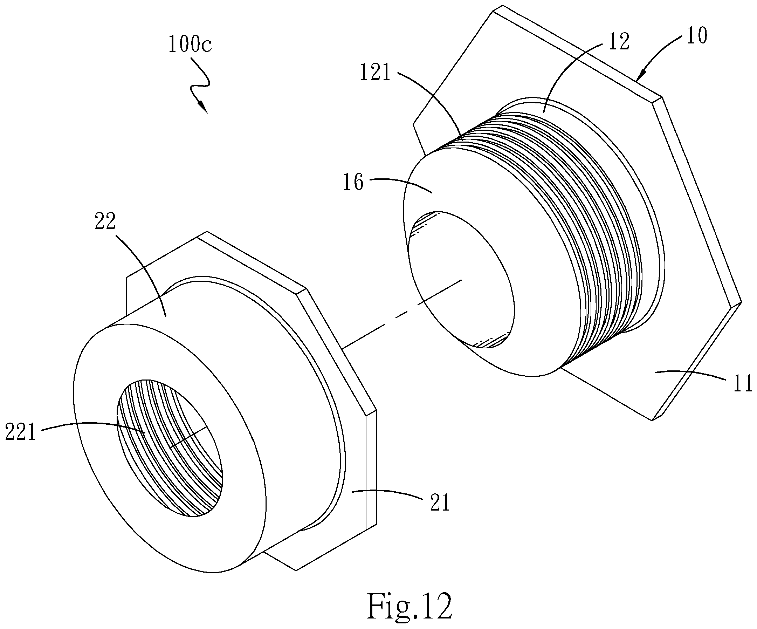

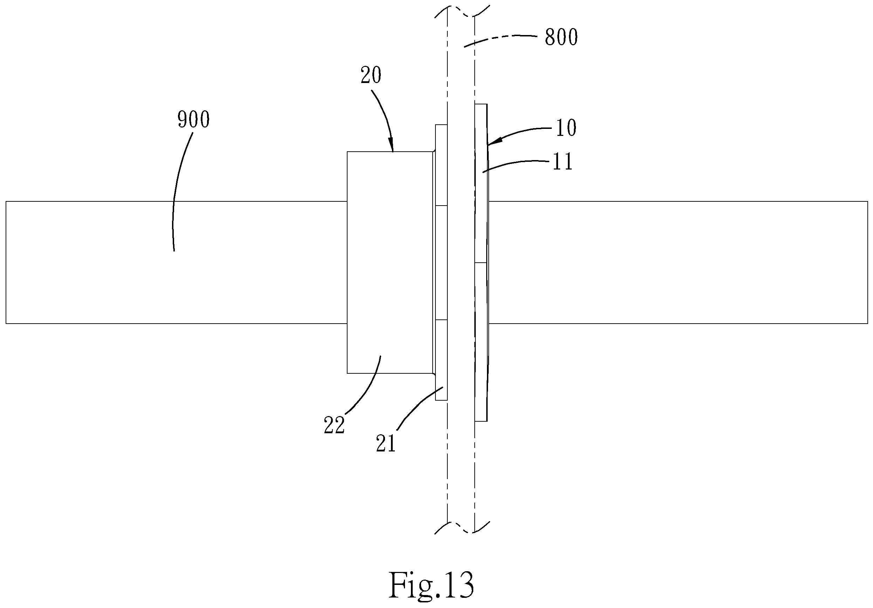

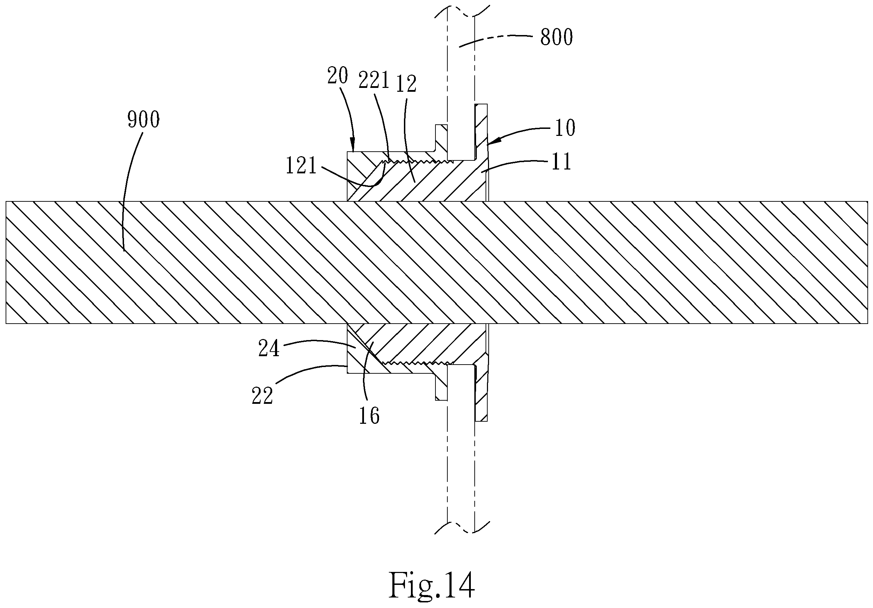

Figs. 12, 13, and 14 show a third embodiment of the present invention. The first component 10 of a heat pipe envelope 100c of a heat exchanger includes a guide angle sleeve 16 connected to the first connection portion 12 and extending away from the first flange 11, and the second component 20 comprises a guide groove 24 connected to the second connection portion 22 and corresponding to the guide angle sleeve 16. The guide angle sleeve 16 is tilted from a position near an axis center towards an outer periphery, and has an inner diameter matching an outer diameter of the heat pipe 900. Thus, after assembly, the guide angle sleeve 16 is capable of closing a seam between the heat pipe 900 and the guide angle sleeve 16, achieving a sealing effect similar to that of the third component 30 in the second embodiment above.

In the heat pipe envelopes 100a, 100b and 100c of the heat exchanger of the present invention, the first component 10 and the second component 20 are connected by a packed connection to accordingly the heat pipe 900 at two ends of the partition 800, and the sealing effect is enhanced by the configuration of the extension portion 14 and the third component 30. Further, in the heat pipe envelopes 100a, 100b and 100c of the heat exchanger of the present invention, no additional operation space for welding needs to be reserved, thus reinforcing the tightness of each of the installation openings 810 so as to enhance the heat conduction efficiency. During cleaning and maintenance, the heat pipe envelopes 100a, 100b and 100c of the heat exchanger and the heat pipe 900 can be separated one after another by merely loosening the first component 10 and the second component 20, thereby overcoming the drawback of high maintenance costs caused by a conventional welding process.

## Claims

1. A heat pipe envelope of a heat exchanger, used to coordinate with a partition (800) and a heat pipe (900) passing through an installation opening (810) on the partition (800), the heat pipe envelope of the heat exchanger comprising:
a first component (10), comprising a first flange (11) leaning against one side of the partition (800), a first connection portion (12) connected to the first flange (11) and passing through the installation opening (810), and a first channel (13) penetrating through the first flange (11) and the first connection portion (12), wherein the heat pipe (900) is penetrated through the first channel (13); and
a second component (20), comprising a second flange (21) leaning against another side of the partition (800) opposite to the first flange (11), a second connection portion (22) connected to the second flange (21) and sleeved on the first connection portion (12) to form tight connection, and a second channel (23) penetrating through the second flange (21) and the second connection portion (22);
wherein the first flange (11) is flexible and is tilted towards the first connection portion (12), the first component (10) is drawn by a force generated by tight connection of the first connection portion (12) and the second connection portion (22), and the first flange (11) is in a sealed state by closely leaning against one side of the partition (800) to generate deformation.

2. The heat pipe envelope of a heat exchanger of claim 1, wherein the first component (10) comprises an extension portion (14) connected to the first connection portion (12) and extending away from the first flange (11), and an extension channel (15) penetrating through the extension portion (14) is in communication with the first channel (13), a diameter of the extension channel (15) is smaller than the first channel (13), and the heat pipe (900) is penetrated through the first channel (13) and the extension channel (15).

3. The heat pipe envelope of a heat exchanger of claim 2, wherein the heat pipe envelope comprises a third component (30) including a heat pipe sleeve (31) sleeved on the heat pipe (900), and a third flange (32) connected to the heat pipe sleeve (31), the heat pipe (900) is penetrated through the extension channel (15), and the third flange (32) blocks at one end of the extension channel (15) facing the first channel (13).

4. The heat pipe envelope of a heat exchanger of claim 3, wherein the third component (30) is a Teflon material.

5. The heat pipe envelope of a heat exchanger of any of the claims 1 to 4, wherein the first component (10) comprises a first screw thread (121) located on an outer periphery of the first connection portion (12), and the second component (20) comprises a second screw thread (221) located on an outer periphery of the second connection portion (22) and paired with the first screw thread (121).

6. The heat pipe envelope of a heat exchanger of any of the claims 1 to 5, wherein a shape of the first flange (11) corresponding to the partition (800) is a polygon.

7. The heat pipe envelope of a heat exchanger of any of the claims 1 to 6, wherein the first component (10) comprises a guide angle sleeve (16) connected to the first connection portion (12) and extending away from the first flange (11).
